# EUROPÄISCHE PATENTSCHRIFT

(11) **EP 3 463 747 B1**
(45) Veröffentlichungstag und Bekanntmachung des Hinweises auf die Patenterteilung: **05.08.2020**
(21) Anmeldenummer: 17728509.5
(22) Anmeldetag: 01.06.2017
(51) Int. Cl.: B23Q 17/00, B23B 31/20, G01L 5/24

(54) **SPANNSYSTEM**
CLAMPING SYSTEM
MANDRIN

(30) Priorität: 07.06.2016 CH 7252016
(43) Veröffentlichungstag der Anmeldung: 10.04.2019
(73) Patentinhaber: Rego-Fix AG, 4456 Tenniken (CH)
(72) Erfinder: SENN, Tobias, 4457 Diegten (CH); ABT, Konrad, 4418 Reigoldswil (CH)
(74) Vertreter: Braun, André jr.
(86) Internationale Anmeldenummer: PCT/EP2017/063295
(87) Internationale Veröffentlichungsnummer: WO 2017/211676

(56) Entgegenhaltungen:
- EP-A1- 0 582 269
- DE-A1-102007 043 889
- DE-B3-102009 054 185
- JP-A- H01 121 181

## Beschreibung

Die Erfindung betrifft ein Spannsystem gemäss dem Oberbegriff des Anspruchs 1 (siehe z.B. DE 10 2007 043 889 A1).

Beim Einspannen eines Werkzeugs in einen Werkzeughalter mittels einer Spannzange wird die konische Spannzange mit einer Spannmutter in den Aufnahmekonus einer Spannzangenaufnahme gepresst, wodurch die Segmente der Spannzange gegen den Werkzeugschaft gepresst werden. Dadurch wird das Werkzeug kraftschlüssig gehalten.

Die Axialkraft, mit der die Spannzange eingepresst wird hängt direkt vom Drehmoment ab, das an der Spannmutter angreift. Dieses Drehmoment sollte innerhalb enger Grenzen eingehalten werden. Bei zu geringem Drehmoment ist der Kraftschluss zwischen Spannzange und Werkzeug zu klein, so dass ein Schlupf des Werkzeugs stattfinden kann. Bei zu grossem Drehmoment können Beschädigungen an der Spannmutter und der Werkzeugaufnahme erfolgen. Ausserdem kann eine Verformung der Spannmutter und der Werkzeugaufnahme stattfinden, die den Rundlauf des Werkzeugs beeinträchtigen kann. Das Einspannen sollte deshalb mit einem Drehmomentschlüssel erfolgen. Dies wird aber in der Praxis häufig nicht befolgt. Häufig wird in Ermangelung eines passenden Drehmomentschlüssels mit einem normalen Schlüssel das grösstmögliche Drehmoment (Hammer!) angewendet, mit den genannten Folgen.

Der Erfindung liegt die Aufgabe zugrunde, eine Lösung dieses Problems zu finden und sicher zu stellen, dass das Einspannen eines Werkzeugs mit dem richtigen Drehmoment erfolgt.

Erfindungsgemäss wird diese Aufgabe gelöst durch die kennzeichnenden Merkmale des Anspruchs 1.

Im Folgenden wird anhand der beiliegenden Zeichnungen ein Ausführungsbeispiel der Erfindung beschrieben. Es zeigen:
- Fig. 1: eine perspektivische Darstellung einer Einspannvorrichtung,
- Fig. 2: eine Schnittdarstellung der in Fig. 1 gezeigten Vorrichtung.

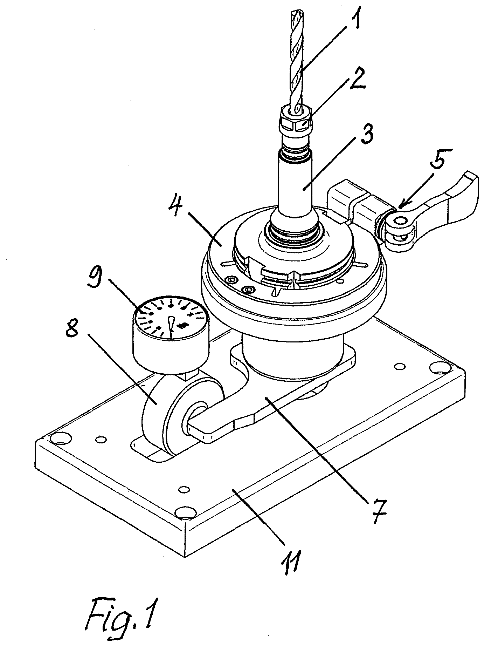

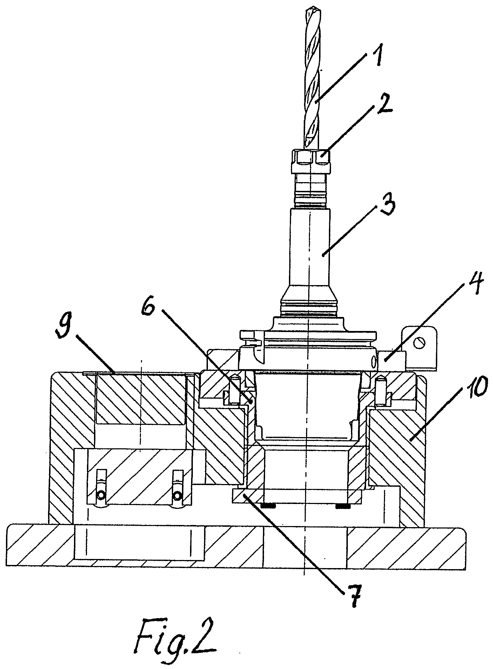

Die in Fig. 1 perspektivisch und in Fig. 2 im Schnitt gezeigte Vorrichtung dient zum Einspannen eines Werkzeugs 1 mittels einer Spannmutter 2 und einer Spannzange (nicht gezeigt) in einen Werkzeughalter 3. In Fig. 1 ist die Vorrichtung der Übersichtlichkeit halber ohne Gehäuse gezeigt.

Ein Spannring 4 weist einen dem äusseren Durchmesser des Flansches des Werkzeughalters entsprechenden Durchmesser auf und ist mit einem Schnellspanner 5 zum schnellen Ein- und Ausspannen des Werkzeughalters versehen. Der Spannring 4 ist starr über eine zylindrische Hülse 6 mit einem Hebel 7 verbunden. Das Ende des Hebels liegt an einer Druckmessdose 8 an, die hydraulisch mit einer Anzeigeeinrichtung 9 verbunden ist. Die Anzeigeeinrichtung ist entsprechend dem an der Spannmutter angreifenden Drehmoment kalibriert.

Die funktionalen Teile der Vorrichtung sind in einem Gehäuse 10 angeordnet, das mit einer Sockelplatte 11 verbunden ist.

Mit der erfindungsgemässen Vorrichtung kann das Anziehen der Spannmutter mit einem beliebigen Werkzeug erfolgen. Ein Drehmomentschlüssel wird nicht benötigt. Wenn bei einem in den Spannring mittels des Schnellspanners eingespannten Werkzeughalter an der Spannmutter ein Drehmoment angreift, wirkt dieses über den Spannring 4 und der Hülse 6 direkt auf den Hebel 7, der dadurch mit einer dem Drehmoment entsprechenden Kraft auf die Druckmessdose drückt. Der dadurch in der Druckmessdose entstehende Druck wird hydraulisch auf die Anzeigevorrichtung übertragen und als Drehmoment angezeigt. Anstelle der Druckmessdose kann auch eine andere Druckmesseinheit, beispielweise ein piezoelektrischer Sensor, verwendet werden.

Der Spannring ist zur Anpassung der Vorrichtung an unterschiedliche Flanschdurchmesser des Werkzeughalters auswechselbar.

## Patentansprüche

1. Spannvorrichtung zum Einspannen eines Werkzeugs (1) mittels Spannzange und Spannmutter (2) in einen Werkzeughalter (3), **gekennzeichnet durch**
- einen Spannring (4) zum Einspannen des Werkzeughalters,
- einen mit dem Spannring starr verbundenen Hebel (7),
- eine Druckmessdose (8), an der der Hebel anliegt und auf sie eine Kraft, die durch ein auf die Spannmutter ausgeübtes Drehmoment erzeugt wird, überträgt, und
- eine mit der Messeinheit verbundene, entsprechend dem ausgeübten Drehmoment kalibrierte Anzeigeeinrichtung (9).

2. Spannvorrichtung nach Anspruch 1, **dadurch gekennzeichnet, dass** der Spannring mit einem Schnellspanner (5) versehen ist.

## Claims

1. Clamping apparatus for clamping a tool (1) in a tool holder (3) by means of a collet and a clamping nut (2), **characterized by**
- a clamping ring (4) for clamping the tool holder,
- a lever (7) rigidly connected to the clamping ring,
- a pressure cell (8) against which the lever rests and to which said lever transmits a force which is generated by a torque exerted on the clamping nut, and
- a display device (9) connected to the measuring unit and calibrated in accordance with the torque exerted.

2. Clamping apparatus according to claim 1, **characterized in that** the clamping ring is provided with a quick-release mechanism (5).

## Revendications

1. Dispositif de serrage permettant de serrer un outil (1) dans un porte-outil (3) au moyen d'une pince de serrage et d'un écrou de serrage (2), **caractérisé par**
- un anneau de serrage (4) permettant de serrer le porte-outil,
- un levier (7) relié rigidement à l'anneau de serrage,
- un dynamomètre (8) sur lequel le levier repose et lui transmet une force générée par un couple exercé sur l'écrou de serrage, et
- un dispositif d'affichage (9) relié à l'unité de mesure et étalonné en fonction du couple exercé.

2. Dispositif de serrage selon la revendication 1, **caractérisé en ce que** l'anneau de serrage est pourvu d'un dispositif de blocage rapide (5).
